(19)

Europäisches
Patentamt
European
Patent Office
Office européen
des brevets

(11) **EP 1 954 063 A2**

(12) **EUROPEAN PATENT APPLICATION**

(43) Date of publication:
06.08.2008 Bulletin 2008/32

(51) Int Cl.:
*H04N 17/00* (2006.01)

(21) Application number: 08001829.4

(22) Date of filing: 31.01.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 01.02.2007 JP 2007022630

(71) Applicant: Sanyo Electric Co., Ltd.
Moriguchi City, Osaka 570-8677 (JP)

(72) Inventors:
• Ishii, Yohei
Osaka 570-8677 (JP)

• Kano, Hiroshi
Osaka 570-8677 (JP)
• Okuda, Kozo
Osaka 570-8677 (JP)
• Asari, Keisuke
Osaka 570-8677 (JP)

(74) Representative: Glawe, Delfs, Moll
Patentanwälte
Postfach 26 01 62
80058 München (DE)

(54) **Apparatus and method for camera calibration, and vehicle**

(57)   A camera calibration apparatus has a parameter deriver adapted to find parameters for projecting an image shot with a camera onto a predetermined surface. The parameter deriver finds the parameters based on a shot-for-calibration image from the camera, and the shot-for-calibration image includes a plurality of calibration patterns of previously known shapes arranged at different positions within the shooting area of the camera.

FIG.1

EP 1 954 063 A2

**Description**

**BACKGROUND OF THE INVENTION**

1. Field of the Invention

The present invention relates to a camera calibration apparatus and a camera calibration method for realizing calibration processing needed to project an image shot with a camera onto a predetermined surface. The invention also relates to a vehicle that employs such an apparatus and a method.

2. Description of Related Art

In recent years, with increasing awareness for safety, more and more vehicles such as automobiles have come to be equipped with cameras (vehicle-mounted cameras). Especially popular are rear cameras that are fitted to help check for safety behind vehicles. The image shot with such a rear camera is displayed on a display apparatus incorporated in a car navigation system or the like, and is used to avoid collision of a vehicle with an obstacle behind it.

To avoid such collision, it is essential for the driver of a vehicle to accurately grasp the distance from the vehicle body to an obstacle. Inconveniently, however, a rear camera is typically installed to point obliquely downward; thus, if the image shot with it is displayed unprocessed, the driver will find great difficulty grasping the distance accurately. Thus, there have been proposed techniques in which a shot image is subjected to coordinate conversion (in other words, image conversion) such that a bird's-eye view as if viewed from above the ground is produced from it and is displayed.

Known methods for achieving such coordinate conversion include one employing perspective projection conversion (see, for example, JP-A-2006-287892) and one employing planar projection conversion (see, for example, JP-A-2006-148745). With either method, for accurate coordinate conversion, it is necessary to adequately adjust conversion parameters for coordinate conversion.

In perspective projection conversion, based on camera external information, such as the angle and height at which a camera is installed, and camera internal information, such as the focal length (or angle of view) of the camera, conversion parameters for projecting a shot image onto a set plane (for example, the surface of the ground) are calculated. Thus, for accurate coordinate conversion, it is necessary to accurately grasp the camera external information. The angle and height at which to install a camera, and the like, are usually prescribed in design. Errors are inevitable, however, between the angle and height as designed and those at which the camera is actually installed on a vehicle. Thus, it is often difficult to measure or estimate accurate conversion parameters.

In planar projection conversion, a calibration pattern is arranged in a shooting area and, based on the calibration pattern shot, calibration operation is performed that involves finding a conversion matrix that represents the correspondence between coordinates in the shot image (two-dimensional camera coordinates) and coordinates in the converted image (two-dimensional world coordinates). This conversion matrix is generally called a homography matrix. Planar projection conversion does not require camera external or internal information, and permits coordinates mutually corresponding between the shot image and the converted image to be specified based on the calibration pattern actually shot. This helps eliminate (ore reduce) the effect of errors in camera installation.

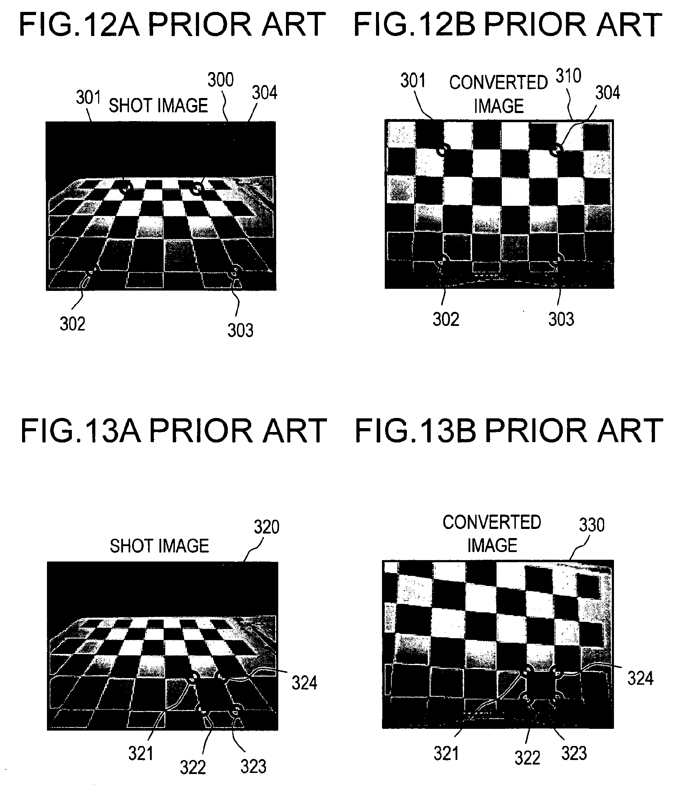

In calibration operation employing planar projection conversion, usually, a calibration pattern is arranged over the entire shooting area, and the coordinates of characteristic points included in the calibration pattern are set. In Fig. 12A, reference sign 300 indicates the image shot by a camera in this calibration operation. In the example corresponding to the shot image 300, a checkered calibration pattern including four or more characteristic points having previously known coordinates is arranged over the entire shooting area. Points 301 to 304 on the shot image 300 are the four characteristic points on the shot image 300.

Then, a homography matrix is found that converts the four characteristic points to the desired positions on the converted image. In Fig. 12B, reference sign 310 indicates the converted image (the image after conversion) obtained as the result of coordinate conversion using the homography matrix. Points 301 to 304 on the converted image 310 are the four characteristic points on the converted image 310. The converted image 310 shows the checkered pattern without distortion, as if viewed from above the ground.

With a method like this, it is necessary to define a coordinate system that covers the entire shooting area, and thus to prepare a large calibration pattern as described above. That is, it is troublesome to set up an environment for calibration, increasing the burden imposed by calibration operation as a whole. Usually, a rear camera installed at the back of a passenger vehicle is intended to help check for safety in a wide field of view, and is given an accordingly wide angle of view, typically shooting an area of about 4 m x 5 m on the ground. Thus, for calibration operation, it is necessary to prepare a calibration pattern having an area of about 4 m x 5 m and occupy as large an area to place it. Moreover, to find the homography matrix, it is necessary to set the coordinates of characteristic points included in the calibration pattern. For more efficient calibration operation, a simpler calibration method has been sought.

An environment for calibration can be set up in a simpler fashion by calculating conversion parameters (a homography matrix) by use of a calibration pattern arranged in part of the shooting area. Specifically, as shown in the shot image 320 in Fig. 13A, four characteristic points 321 to 324 are set in a limited small area within the shooting area and, by use of these four characteristic points 321 to 324, the converted image is obtained. Here, for the sake of convenience of description, the same scene as that with the checkered pattern in the shot image 300 in Fig. 12A is shot; the difference is that, in the example shown in Fig. 13A, the small square confined by the four characteristic points 321 to 324 is grasped as the calibration pattern.

Reference sign 330 in Fig. 13B indicates the conversion image obtained by this method. Since conversion parameters (a homography matrix) are calculated by use of the four characteristic points 321 to 324 specified for calibration, the accuracy of coordinate conversion is comparatively high around the calibration pattern. The farther away from the calibration pattern, however, the greater the effect of errors in the coordinates set for the four characteristic points 321 to 324, and thus the lower the accuracy of coordinate conversion.

Incidentally, JP-A-2004-342067 discloses a method in which conversion parameters based on planar projection conversion are adjusted by use of images shot at a plurality of positions (see, among others, paragraph 69 etc.). Even this method requires that a coordinate system (two-dimensional world coordinate system) common to the plurality of images be set, and thus provides no solution to the trouble with setting up the calibration environment.

As described above, perspective projection conversion suffers from the effect of errors in camera installation; planar projection conversion suffers from the trouble with setting up a calibration environment; and planar projection conversion in which a calibration pattern is arranged in part of the shooting area suffers from low coordinate conversion accuracy (calibration accuracy).

## SUMMARY OF THE INVENTION

In view of the above, it is an object of the present invention to provide a camera calibration apparatus and a camera calibration method that are less susceptible to errors in camera installation and that contribute to simpler setting-up of a calibration environment and to higher calibration accuracy. It is another object of the invention to provide a vehicle employing such an apparatus and a method.

A first camera calibration apparatus according to the invention is provided with: a parameter deriver adapted to find parameters for projecting an image shot with a camera onto a predetermined surface. Here, the parameter deriver finds the parameters based on a shot-for-calibration image from the camera, and the shot-for-calibration image includes a plurality of calibration patterns of previously known shapes arranged at different positions within the shooting area of the camera.

By use of the previously known shapes of the calibration patterns included in the shot-for-calibration image, the parameters can be derived by, for example, planar projection conversion. This helps alleviate the effect of errors in camera installation. Moreover, arranging a plurality of calibration patterns at different positions within the shooting area makes it possible, for example, to find parameters first on a tentative basis by use of a given calibration pattern and then optimize the parameters by use of a remaining calibration pattern. This helps alleviate the conventionally encountered inconveniences explained previously with reference to Figs. 13A and 13B. That is, higher calibration accuracy is expected. Moreover, there is no need to prepare a calibration pattern that covers the entire shooting area. This helps simplify the setting-up of the calibration environment.

In the first camera calibration apparatus, perspective projection conversion may instead be employed. Then, the initial values of parameters found by perspective projection conversion can be adjusted by use of the calibration patterns of previously known shapes. This helps reduce the effect of errors in camera installation.

Specifically, for example, the plurality of calibration patterns include a first calibration pattern and a second calibration pattern. And the parameter deriver first finds initial parameters based on coordinate information on the first calibration pattern on the shot-for-calibration image and first previously known information on the shape of the first calibration pattern, and then performs coordinate conversion on the second calibration pattern on the shot-for-calibration image by using the initial parameters and performs adjustment on the initial parameters based on the shape of the second calibration pattern after the coordinate conversion and second previously known information on this shape, in order to find, through this adjustment, the parameters definitively.

For example, the first calibration pattern includes at least four characteristic points, and the first previously known information identifies a positional relationship of the four characteristic points relative to one another.

A second camera calibration apparatus according to the invention is provided with: a parameter deriver adapted to find parameters for projecting an image shot with a camera onto a predetermined surface. Here, the parameter deriver finds the parameters based on a shot-for-calibration image from the camera, and the shot-for-calibration image includes a calibration pattern of a previously known shape arranged inside the shooting area of the camera. Moreover, the parameter deriver performs coordinate conversion on the calibration pattern on the shot-for-calibration image by using initial parameters based on previously set information and then performs adjustment on the initial parameters based on the shape of the calibration pattern after the coordinate conversion and previously known information on this shape, in order to find, through this adjustment, the parameters definitively.

Initial parameters are found based on, for example, the position at which the camera is installed. Adjusting them by use of the calibration pattern of a previously known shape helps reduce the effect of errors in camera installation. Thus, higher calibration accuracy is expected. Moreover, there is no need to prepare a calibration pattern that covers the entire shooting area. This helps simplify the setting-up of the calibration environment.

A vehicle according to the invention is provided with a camera and an image processing apparatus, and the image processing apparatus is provided with any one of the camera calibration apparatuses described above.

A first camera calibration method according to the invention for finding parameters for projecting an image shot with a camera onto a predetermined surface includes: a parameter derivation step of finding the parameters based on a shot-for-calibration image from the camera. Here, the shot-for-calibration image includes a plurality of calibration patterns of previously known shapes arranged at different positions within the shooting area of the camera.

A second camera calibration method according to the invention for finding parameters for projecting an image shot with a camera onto a predetermined surface includes: a parameter derivation step of finding the parameters based on a shot-for-calibration image from the camera. Here, the shot-for-calibration image includes a calibration pattern of a previously known shape arranged inside a shooting area of the camera. And the parameter derivation step includes a parameter adjustment step in which coordinate conversion is performed on the calibration pattern on the shot-for-calibration image by using initial parameters based on previously set information and then adjustment is performed on the initial parameters based on the shape of the calibration pattern after the coordinate conversion and previously known information on this shape, so that, through this adjustment, the parameters are definitively found.

According to the invention, it is possible to realize a camera calibration apparatus and a camera calibration method that are less susceptible to errors in camera installation and that contribute to simpler setting-up of a calibration environment and to higher calibration accuracy. Moreover, according to the invention, it is possible to provide a vehicle employing such an apparatus and a method.

The significance and benefits of the invention will be clear from the following description of its embodiments. It should however be understood that these embodiments are merely examples of how the invention is implemented, and that the meanings of the terms used to describe the invention and its features are not limited to the specific ones in which they are used in the description of the embodiments.

## BRIEF DESCRIPTION OF THE DRAWINGS

Fig. 1 is a top view of a vehicle equipped with a camera according to an embodiment of the invention;

Fig. 2 is a block diagram of the configuration of a field-of-view assistance system according to an embodiment of the invention;

Fig. 3 is a flow chart showing the procedure for conversion parameter calibration processing in Example 1 of the invention;

Figs. 4A to 4C are diagrams showing how calibration proceeds according to the conversion parameter calibration processing shown in Fig. 3;

Fig. 5 is a diagram showing errors between the shape of a calibration pattern as it actually appears on a converted image and the shape of the calibration pattern as it should ideally appear on the converted image, as observed in Example 1 of the invention;

Fig. 6 is a flow chart showing the procedure for conversion parameter calibration processing in Example 2 of the invention;

Fig. 7A and 7B are diagrams showing camera installation errors (rotational components) relative to the vehicle shown in Fig. 1;

Figs. 8A and 8B are diagrams illustrating rotation correction in Example 2 of the invention;

Fig. 9 is a flow chart showing the procedure for conversion parameter calibration processing in Example 3 of the invention;

Fig. 10 is a side view of the vehicle shown in Fig. 1, showing how the camera is fitted relative to the vehicle;

Fig. 11 is a top view of a calibration plate with a calibration pattern drawn on it;

Figs. 12A and 12B are diagrams illustrating inconveniences encountered with a conventional calibration method employing planar projection conversion; and

Figs. 13A and 13B are diagrams illustrating inconveniences encountered with a conventional calibration method employing planar projection conversion.

**DETAILED DESCRIPTION OF PREFERRED EMBODIMENTS**

Hereinafter, embodiments of the present invention will be described specifically with reference to the accompanying drawings. Among the drawings referred to in the course of description, the same parts are identified by common reference signs, and in principle no overlapping description of the same parts will be repeated. First, prior to the specific presentation of Examples 1 to 3, such features as are common to all the examples or are referred to in the course of their description will be described.

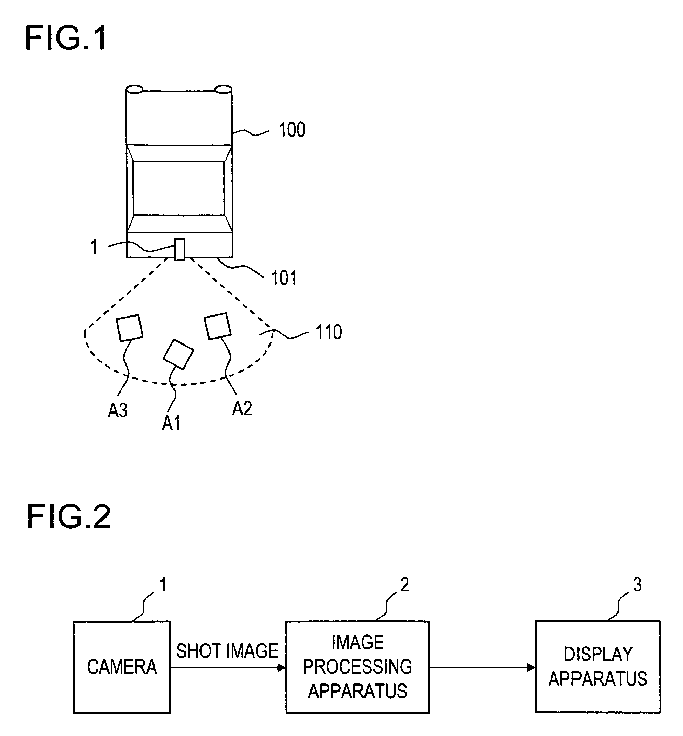

Fig. 1 is a top view of a vehicle 100, which is here an automobile. The vehicle 100 is equipped with a camera (image-sensing apparatus) 1 on its rear part. The camera 1 is installed on the vehicle 100 in such a way as to have a field of view behind the car. The camera 1 is thus one of such cameras as are installed to avoid collision of a vehicle - here the vehicle 100 - with an obstacle or the like. Thus, part of the vehicle 100 lies in the field of view of the camera 1. In the example shown in Fig. 1, the bumper 101 provided at the rear end of the body of the vehicle 100 lies in the field of view of the camera 1. Although the vehicle 100 is here assumed to be a common passenger car, it may be any other kind of vehicle instead (such as a truck).

The fan-shaped area enclosed by broken lines and identified by reference sign 110 represents the shooting area of the camera 1. Reference signs A1, A2, and A3 each indicate a planar (two-dimensional) calibration pattern arranged within the shooting area of the camera 1 on the ground. The calibration patterns A1 to A3 are used when the camera 1 is calibrated (the details will be described later). In the following description, it is assumed that the ground lies on the horizontal plane, and that the word "height" denotes a height with respect to the ground.

Fig. 2 is a block diagram showing the configuration of a field-of-view assistance system according to an embodiment of the invention. The camera 1 shoots an image, and feeds the signal representing the image (hereinafter also referred to as the "shot image") to an image processing apparatus 2. The image processing apparatus 2 converts the shot image by point-of-view conversion into a bird's-eye view image. It is here assumed that the shot image, from which the bird's-eye view image is produced, is first subjected to image processing such as correction of lens-induced distortion and is then converted into the bird's-eye view image. A display apparatus 3 the displays the bird's-eye view image as a video image.

In the bird's-eye view image, the image actually shot with the camera 1 is converted into an image as if viewed from the point of view (virtual viewpoint) of a virtual camera. More specifically, in the bird's-eye view image, the image actually shot with the camera 1 is converted into an image that would be obtained when the ground were viewed vertically down from above. This type of image conversion is generally called point-of-view conversion. Displaying a bird's-eye view image like this assists a driver in the field of view behind a vehicle, and makes it easy to check for safety behind the vehicle.

Used as the camera 1 is, for example, a camera employing a CCD (charge-coupled device) or a camera employing a CMOS (complementary metal oxide semiconductor). The image processing apparatus 2 is, for example, built with an integrated circuit. The display apparatus 3 is, for example, built with a liquid crystal display panel. A display apparatus incorporated in a car navigation system or the like may be shared as the display apparatus 3 of the field-of-view assistance system. The image processing apparatus 2 may be incorporated in, as part of, a car navigation system. The image processing apparatus 2 and the display apparatus 3 are installed, for example, near the driver's seat in the vehicle 100.

To assist in the check for safety in a wide field of view, the camera 1 is given an accordingly wide angle of view. Thus, the shooting area of the camera 1 has an area of about 4 m x 5 m (meters) on the ground. In the example shown in Fig. 1, three calibration patterns A1 to A3 are used that are each smaller than the shooting area.

The calibration patterns A1 to A3 are each square in shape, each side measuring about 1 m. The calibration patterns A1 to A3 do not necessarily have to be given an identical shape; here, however, for the sake of convenience of description, it is assumed that they all have an identical shape. The concept of "shape" here includes "size". Thus, the calibration patterns A1 to A3 are identical in both shape and size. On the bird's-eye view image, ideally, the calibration patterns A1 to A3 should all appear square.

Since each calibration pattern is square in shape, it has four characteristic points. In the example under discussion, the four characteristic points correspond to the four vertices of the square. The image processing apparatus 2 previously recognizes the shape of each calibration pattern as previously known information. With this previously known information, it is possible to identify, for each calibration pattern (A1, A2, or A3), the ideal positional relationship of its four characteristic points relative to one another on the later-described converted image (and hence in the real space).

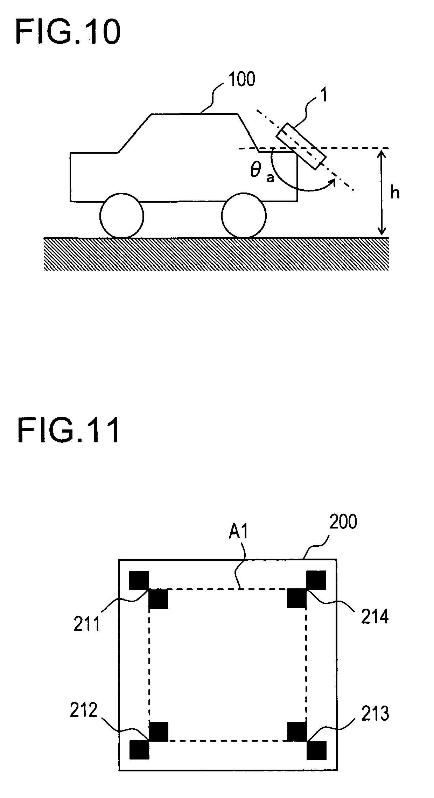

The shape of a calibration pattern is the shape of the geometric figure formed when the characteristic points included in that calibration pattern are connected together. For example, three calibration plates each square in shape are in their respective entireties dealt with as the three calibration patterns A1 to A3, and the four corners of each calibration plate are dealt with as the four characteristic points of the corresponding calibration pattern. Alternatively, for example, a calibration plate with the calibration pattern A1 drawn on it, a calibration plate with the calibration pattern A2 drawn on it, and a calibration plate with the calibration pattern A3 drawn on it are prepared. In this case, the exterior shapes of the calibration plates themselves differ from the exterior shapes of the calibration patterns. As an example, Fig. 11 shows a plan view of a square calibration plate 200 having the calibration pattern A1 drawn on it. The calibration plate 200 has a white background and, in each of the four corners of the calibration plate 200, two solid black squares are drawn that are connected together at one vertex of each. The points 211 to 214 at which such two solid black squares are connected together in the four corners of the calibration plate 200 correspond to the characteristic points of the calibration pattern A1.

The color of the calibration plates themselves and the color of the patterns drawn on them are selected appropriately so that the camera 1 (and the image processing apparatus 2) can surely distinguish and recognize the individual characteristic points on the calibration patterns from the surface of the ground and the like. In the following description of this embodiment, however, for the sake of convenience of illustration and description, the calibration plates are ignored, and the calibration patterns alone will be considered.

Each calibration pattern is arranged to lie within the shooting area of the camera 1, but how it is arranged there is arbitrary. Specifically, the position at which to arrange each calibration pattern within the shooting area is arbitrary, and the positional relationship of different calibration patterns relative to one another also is arbitrary. It is however assumed that different calibration patterns are arranged at different positions within the shooting area. Moreover, different calibration patterns are arranged separate from one another so as to have no overlap between any two of them. As will be understood from the earlier explanation, made with reference to Figs. 13A and 13B, of how the conventionally encountered inconveniences occur, and also from the further explanation made later in this connection, for higher calibration accuracy, it is preferable that the three (or more) calibration patterns be arranged away from one another over an adequately wide area.

To produce a bird's-eye view image, conversion parameters for converting the shot image into a bird's-eye view image are necessary. To produce a proper bird's-eye view image, that is, to produce one on which each calibration pattern appears square (or substantially square), the image processing apparatus 2 calibrates conversion parameters and then, by use of the thus calibrated conversion parameters, converts the shot image into a bird's-eye view image. Below will be presented three examples, namely Examples 1 to 3, of this calibration processing.

**Example 1**

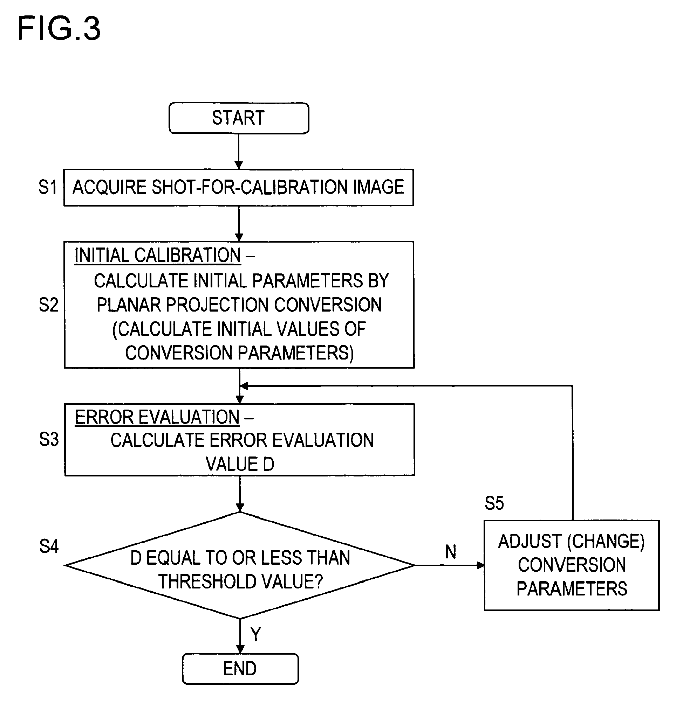

First, Example 1 will be described. Fig. 3 is a flow chart showing the procedure of conversion parameter calibration processing in Example 1. The operation in step S 1 is executed by the camera 1 (and the image processing apparatus 2); the operations in steps S2 to S5 are executed by the image processing apparatus 2.

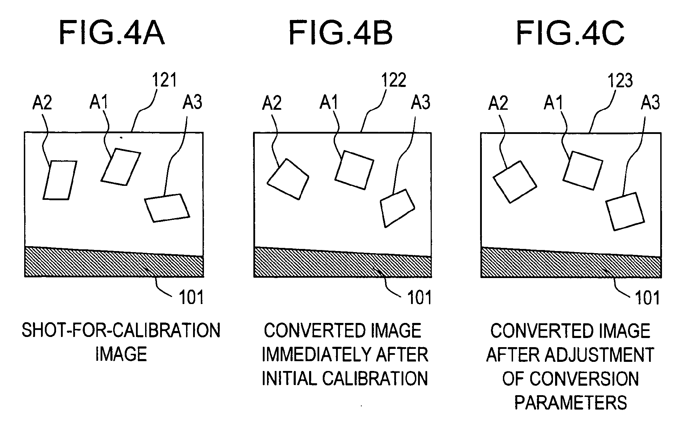

First, in step S1, the calibration patterns A1 to A3 arranged within the shooting area as described above are shot with the camera 1 to obtain a shot image. This shot image is called the "shot-for-calibration image". In Fig. 4A, reference sign 121 indicates the shot-for-calibration image. In Figs. 4A to 4C, part of the bumper 101 appears on the images.

Next, in step S2, initial calibration is performed. In the initial calibration, planar projection conversion is performed by use of any one of the three calibration patterns A1 to A3 included in the shot-for-calibration image to calculate initial parameters, which will be dealt with as the initial values of the conversion parameters to be found definitively. The initial parameters are the initial values of a homography matrix used to obtain a bird's-eye view image. Which calibration pattern to use to calculate the initial parameters is arbitrary. Here, it is assumed that the calibration pattern A1, which is located at the middle, is used.

The operation in step S2 will now be described. The image obtained by subjecting the shot-for-calibration image to coordinate conversion (image conversion) using the homography matrix is called the "converted-for-calibration image". In step S2, the shot-for-calibration image and the converted-for-calibration image are dealt with as the original image and the converted image, respectively. The coordinates of a point on the original image are represented by (x, y), and the coordinates of a point on the converted image are represented by (X, Y). The relationship between coordinates (x, y) on the original image and coordinates (X, Y) on the converted image is expressed, by use of a homography matrix H, by formula (1) below. The homography matrix H is a three-row, three-column matrix, and its individual elements are represented by $h_1$ to $h_9$. Here, it is assumed that $h_9 = 1$ (the matrix is normalized such that $h_9 = 1$). Based on formula (1), the relationship between coordinates (x, y) and coordinates (X, Y) can also be expressed by formulae (2a) and (2b) below

$$\begin{pmatrix} X \\ Y \\ 1 \end{pmatrix} = H \begin{pmatrix} x \\ y \\ 1 \end{pmatrix} = \begin{pmatrix} h_1 & h_2 & h_3 \\ h_4 & h_5 & h_6 \\ h_7 & h_8 & h_9 \end{pmatrix} \begin{pmatrix} x \\ y \\ 1 \end{pmatrix}$$

$$= \begin{pmatrix} h_1 & h_2 & h_3 \\ h_4 & h_5 & h_6 \\ h_7 & h_8 & 1 \end{pmatrix} \begin{pmatrix} x \\ y \\ 1 \end{pmatrix}$$

(1)

$$X = \frac{h_1 x + h_2 y + h_3}{h_7 x + h_8 y + h_9}$$

(2a)

$$Y = \frac{h_4 x + h_5 y + h_6}{h_7 x + h_8 y + h_9}$$

(2b)

In step S2, the image processing apparatus 2 performs edge detection or the like on the original image to identify the coordinates of the four characteristic points of the calibration pattern A1 on the original image. The thus identified four sets of coordinates are represented by $(x_1, y_1)$, $(x_2, y_2)$, $(x_3, y_3)$, and $(x_4, y_4)$. Moreover, according to the previously known information it previously recognizes, the image processing apparatus 2 determines the coordinates of the four characteristic points of the calibration pattern A1 on the converted image. The thus determined four sets of coordinates are represented by $(X_1, Y_1)$, $(X_2, Y_2)$, $(X_3, Y_3)$, and $(X_4, Y_4)$. Since the calibration pattern A1 is square in shape, the coordinates $(X_1, Y_1)$, $(X_2, Y_2)$, $(X_3, Y_3)$, and $(X_4, Y_4)$ can be defined to be, for example, (0, 0), (1, 0), (0, 1), and (1, 1).

Now that the correspondence between the coordinates of four points on the original image and their coordinates on the converted image is known, the homography matrix H is determined uniquely. To find a homography matrix (projection conversion matrix) based on the correspondence between the coordinates of four points on the original image and their coordinates on the converted image, one of generally known methods is used. For example, one of the methods described in JP-A-2004-342067 is used (see, among others, the one described in paragraphs [0059] to [0069]). Specifically, the elements $h_1$ to $h_8$ of the homography matrix H are found such that the coordinates $(x_1, y_1)$, $(x_2, y_2)$, $(x_3, y_3)$, and $(x_4, y_4)$ on the original image are converted to the coordinates $(X_1, Y_1)$, $(X_2, Y_2)$, $(X_3, Y_3)$, and $(X_4, Y_4)$, respectively, on the converted image. In practice, the elements $h_1$ to $h_8$ are found such as to minimize the error of the conversion (the evaluation function mentioned in JP-A-2004-342067). The homography matrix H having the thus found elements $h_1$ to $h_8$ (and $h_9$) is the initial parameters to be found in step S2.

Once the homography matrix H is found, any point on the original image can be converted to a point on the converted image according to formulae (2a) and (2b). In Fig. 4B, reference sign 122 indicates the converted image immediately after the initial calibration (that is, the converted image obtained through conversion using the initial parameters). In this converted image 122, whereas the calibration pattern A1 located at the middle already appears square, due to errors (such as those in specified coordinates), the calibration patterns A2 and A3 located at left and right usually still do not appear square.

After the initial parameters are calculated, the error between the shapes of the individual calibration patterns as they actually appear on the converted image and their shapes as they should ideally appear on the converted image are evaluated and, through repeated calculations, the conversion parameters are adjusted so as to minimize those errors.

Specifically, in step S3, first, an error evaluation value D is calculated that represents the errors between the shapes of the individual calibration patterns as they actually appear on the converted image and their shapes as they should ideally appear on the converted image.

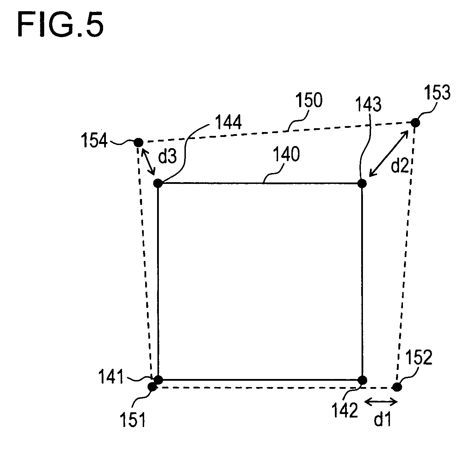

Now, with reference to Fig. 5, the method of calculating the error evaluation value D will be described. In Fig. 5, the square indicated by reference sign 140 represents the shape of a calibration pattern (A1, A2, or A3) as it should ideally appear on the converted image. On the other hand, the quadrangle indicated by reference sign 150 represents the shape of the calibration pattern (A1, A2, or A3) as it actually appears on the converted image. That is, the quadrangle 150 represents the shape of the calibration pattern after coordinate conversion - that obtained by subjecting the calibration pattern on the shot-for-calibration image to coordinate conversion using the homography matrix H. As described previously, the shape of the square 140 is previously known to the image processing apparatus 2.

In Fig. 5, reference signs 141 to 144 indicate the four vertices of the square 140, and reference signs 151 to 154 indicate the four vertices of the quadrangle 150. The coordinates of the individual vertices 151 to 154 of the quadrangle 150 are obtained by converting the coordinates $(x, y)$ of the individual vertices of the calibration pattern (that is, the characteristic points) on the original image to coordinates $(X, Y)$ on the converted image according to formulae (2a) and (2b). The elements $h_1$ to $h_9$ of the homography matrix H used in this conversion are first calculated in step S2, and are later updated in later-described step S5. In step S3, the coordinates of the individual vertices 151 to 154 are calculated by use of the latest elements $h_1$ to $h_9$.

Suppose now that, on the converted image, the vertex 141 and the vertex 151 are made to coincide in coordinates. Then, the line segment connecting the vertices 141 and 142 together and the line segment connecting the vertices 151 and 152 together are made to overlap. That is, suppose that the square 140, which has the previously known shape, is so rearranged on the converted image that the vertices 141 and 151 coincide in coordinate and the just-mentioned two line segments overlap. In Fig. 5, for the sake of convenience of illustration, the square 140 and the quadrangle 150 are shown slightly apart.

In this case, as considered on the converted image, the positional error between the vertices 142 and 152 is represented by d1, the positional error between the vertices 143 and 153 is represented by d2, and the positional error between the vertices 144 and 154 is represented by d3. The positional error d1 is the distance between the vertices 142 and 152 as considered on the converted image, and so are the positional errors d2 and d3 between the corresponding vertices.

Such positional errors d1 to d3 are calculated for each of the calibration patterns A1 to A3. That is, for one converted image, nine positional errors are calculated. The error evaluation value D is the sum total of those nine positional errors. Since a positional error is the distance between vertices compared, it always takes a zero or positive value. The error evaluation value D is calculated according to formula (3) below. In the right side of the formula (3), the left-hand $\Sigma$ - the one preceding the right-hand $\Sigma$ representing the sum (d1+ d2 + d3) - denotes calculating the sum total with as many calibration patterns as there are.

$$D = \sum \sum_{n=1}^{3} dn \qquad (3)$$

After the error evaluation value D is calculated in step S3, then in step S4, whether or not the error evaluation value D is equal to or less than a predetermined threshold value is checked. If the error evaluation value D is not equal to or less than the threshold value, then, in step S5, the conversion parameters are changed. That is, the individual elements $h_1$ to $h_9$ are adjusted (changed from their previous values), and then a return is made to step S3. In a case where a return is made from step S5 to step S3, the same operation as described above is performed by use of the thus adjusted elements $h_1$ to $h_9$.

By contrast, if the error evaluation value D is equal to or less than the threshold value, then it is judged that the conversion parameters have now been optimized through the repeated calculations in steps S3 to S5. Thus, the conversion parameters obtained definitively (that is, the latest homography matrix H obtained through adjustment) are dealt with as calibrated conversion parameters. In Fig. 4C, reference sign 123 indicates the converted image after the optimization of the conversion parameters (that is, the converted image obtained through conversion using the calibrated conversion parameters). Thereafter, the conversion parameter calibration processing shown in Fig. 3 is ended.

In practice, for example, based on the latest homography matrix H, table data is created that indicates the correspondence between coordinates $(x, y)$ on the original image and coordinates $(X, Y)$ on the converted image, and the table data is stored in an unillustrated memory (lookup table). By use of this table data, a shot image can be converted into a bird's-eye view image, and in this bird's-eye view image, each calibration pattern appears substantially square. In this case, the table data may be regarded as the above-mentioned calibrated conversion parameters.

To achieve the optimization of the conversion parameters in steps S3 to S5, one of generally known methods is used. For example, a multiple-dimensional downhill simplex method, the Powell method, or the like is used (see, for example, "Numerical Recipes in C" by William H. Press et al., Gijutsu-Hyoron-Sha, 1993). Since these methods are well known, no description of any will be given here.

To detect characteristic points in a given image, an automatic detection method employing image processing as described above may be adopted; instead, a manual detection method may be adopted that relies on manual operations made on an operated portion (unillustrated).

After the conversion parameter calibration processing shown in Fig. 3, the image processing apparatus 2 shown in Fig. 2 converts one shot image after another obtained from the camera 1 to one bird's-eye view image after another by use of the calibrated conversion parameters. Here, each shot image is dealt with as an original image, and each bird's-eye view image is dealt with as a converted image. Thus, the coordinates of a point on a shot image are represented by (x, y), and the coordinates of a point on a bird's-eye view image is represented by (X, Y). The image processing apparatus 2 feeds the video signal representing one bird's-eye view image after another to the display apparatus 3. The display apparatus 3 thus displays the bird's-eye view images as a moving image.

In Example 1, calibration is achieved by planar projection conversion. This makes it possible to absorb errors in camera installation. Moreover, calibration patterns smaller than the shooting area are used, and the calibration environment is set up by arranging them freely within the shooting area. This permits the calibration environment to be set up in a simpler fashion than with a conventional calibration method employing planar projection conversion. Conventionally, using a small calibration pattern disadvantageously results in low calibration accuracy; by contrast, using a plurality of calibration patterns of previously known shapes and adjusting conversion parameters helps obtain higher calibration accuracy.

When a field-of-view assistance system intended for a driver of a vehicle is configured as in Example 1, it can be used, for example, to perform calibration with calibration patterns arranged temporarily in a parking lot in an automobile shop or the like that finds difficulty setting up a calibration environment. Moreover, since calibration patterns can be made significantly smaller than the shooting area, calibration patterns (or calibration plates having calibration patterns drawn on them) can be made so small as to be portable. This is expected to reduce the burden imposed by calibration operation.

### Example 2

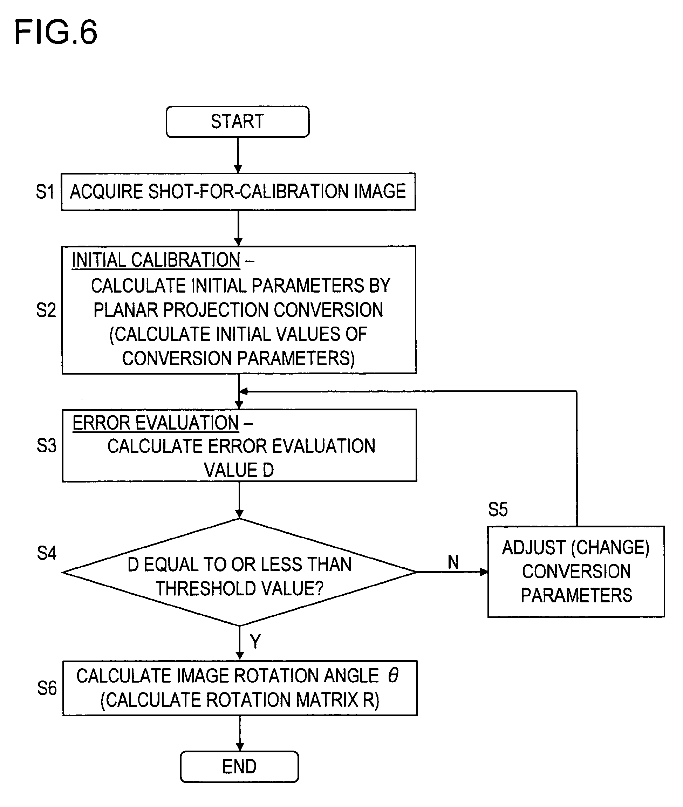

Next, Example 2 will be described. Fig. 6 is a flow chart showing the procedure of conversion parameter calibration processing in Example 2. The conversion parameter calibration processing in Example 2 includes operations in steps S 1 to S5 and an operation in step S6. The operation in step S6 is executed by the image processing apparatus 2.

The operations in steps S1 to S5 are the same as in Example 1. Accordingly, no overlapping description of them will be repeated. In Example 2, if, in step S4, the error evaluation value D is equal to or less than the predetermined threshold value, it is judged that the homography matrix H has now been optimized through the repeated calculations in steps S3 to S5, and an advance is made to step S6.

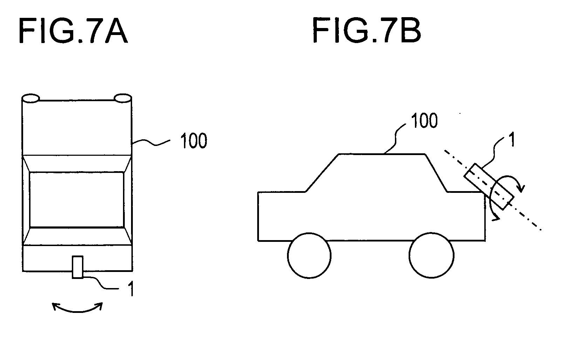

Installed for the check for safety behind the vehicle 100, the camera 1 is typically so fitted as to shoot behind the vehicle 100 evenly to the right and left with no inclination. Since installation errors are inevitable, however, a shot image is usually inclined. For example, an installation error due to a rotation in a horizontal plane as shown in Fig. 7A or an installation error due to a rotation about the optical axis of the camera 1 as shown in fig 7B causes an inclination in a shot image.

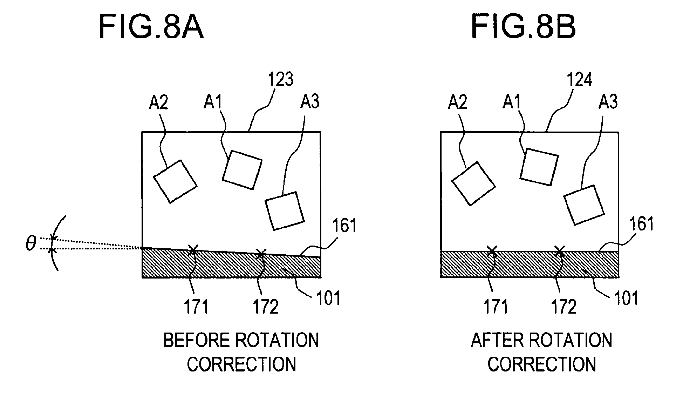

Fig. 8A shows the same converted image 123 as shown in Fig. 4C. An installation error as mentioned above gives an inclination to the border 161 between the bumper 101 and the ground as seen on the image, while the border 161 should ideally appear parallel to the horizontal direction of the image. Thus, in Example 2, after steps S1 to S5, angle adjustment is performed to correct the inclination.

Specifically, in step S6, two points are set as border points between the bumper 101 and the ground in the converted image 123. In Fig. 8A (and also later-described Fig. 8B), reference signs 171 and 172 indicate the thus set two border points. The border points 171 and 172 lie on the border line 161. Then, on the converted image 123, the angle θ between the straight line connecting the border points 171 and 172 together and a horizontal line of the converted image 123 (this angle θ is acute) is found. The horizontal line is a line that extends in the horizontal direction of the image. To detect border points, an automatic detection method employing image processing may be adopted, or instead a manual detection method relying on manual operations made on an operated portion (unillustrated) may be adopted.

When the rotation matrix for making the border line 161 on the converted image 123 parallel to the horizontal line of the image is represented by R, then the rotation matrix R is expressed, by use of the angle θ, by formula (4) below.

$$R = \begin{pmatrix} \cos\theta & -\sin\theta \\ \sin\theta & \cos\theta \end{pmatrix} \qquad (4)$$

In Fig. 8B, reference sign 124 indicates the image obtained by rotating the converted image 123 according to the rotation matrix R. When the coordinates of a point on an image (for example, the converted image 123) before rotation correction according to the rotation matrix R are represented by (X, Y), and the coordinates of a point on an image (for example, the image 124) after rotation correction according to the rotation matrix R are represented by (X', Y'), then the relationship given by formula (5) below holds.

$$\begin{pmatrix} X' \\ Y' \end{pmatrix} = R \begin{pmatrix} X \\ Y \end{pmatrix} \qquad (5)$$

On completion of the operation in step S6, the conversion parameter calibration processing shown in Fig. 6 is ended. In Example 2, the latest homography matrix H obtained through the adjustment in steps S3 to S5 and the above-described rotation matrix R are dealt with as the calibrated conversion parameters.

In practice, for example, based on the latest homography matrix H and the above rotation matrix R, table data is created that indicates the correspondence between coordinates (x, y) on the original image and coordinates (X', Y') on the image after the rotation correction, and the table data is stored in an unillustrated memory (lookup table). By use of this table data, a shot image can be converted into a bird's-eye view image; in this bird's-eye view image, each calibration pattern appears substantially square, and in addition the image has been corrected for the inclination due to errors in the installation of the camera 1. In this case, the table data may be regarded as the above-mentioned calibrated conversion parameters.

After the conversion parameter calibration processing shown in Fig. 6, the image processing apparatus 2 shown in Fig. 2 converts one shot image after another obtained from the camera 1 to one bird's-eye view image after another by use of the calibrated conversion parameters based on the homography matrix H and the rotation matrix R. Here, each shot image is dealt with as an original image, and each bird's-eye view image is dealt with as an image after the rotation correction. Thus, the coordinates of a point on a shot image are represented by (x, y), and the coordinates of a point on a bird's-eye view image is represented by (X', Y'). The image processing apparatus 2 feeds the video signal representing one bird's-eye view image after another to the display apparatus 3. The display apparatus 3 thus displays the bird's-eye view images as a moving image.

According to Example 2, an inclination in an image mainly due to errors in the installation of the camera 1 is corrected. Needless to say, the same benefits as those obtained with Example 1 are obtained here as well.

**Example 3**

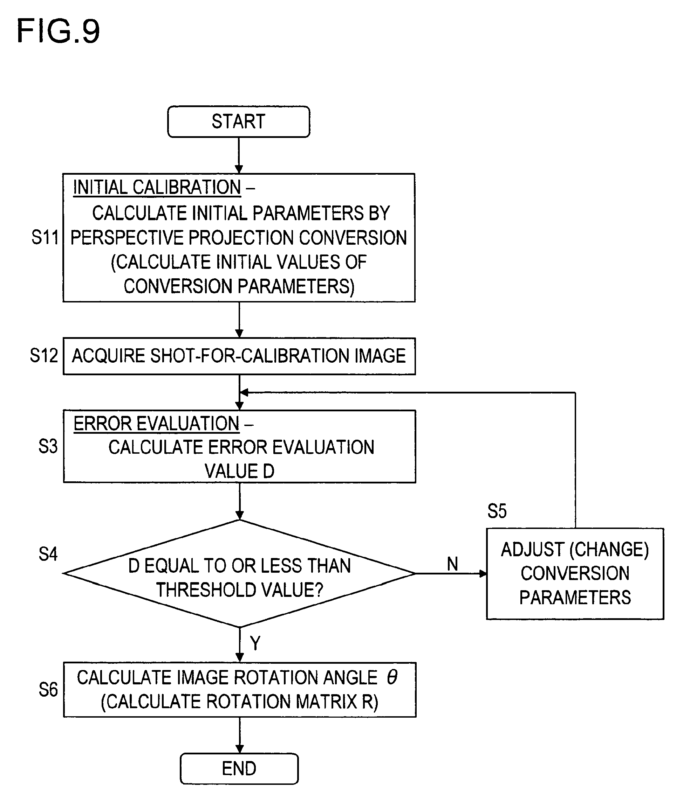

Next, Example 3 will be described. Fig. 9 is a flow chart showing the procedure of conversion parameter calibration processing in Example 3. In the conversion parameter calibration processing in Example 3, initial parameters are calculated by perspective projection conversion. The operations after the calculation of the initial parameters are the same as those in Example 1 or 2. In the conversion parameter calibration processing shown in Fig. 9, the operations after the calculation of the initial parameters are the same as those in Example 2; they may instead be the same as those in Example 1 (that is, step S6 may be omitted).

The conversion parameter calibration processing shown in Fig. 9 includes operations in steps S11 and S12 and operations in steps S3 to S6. The operations in steps S3 to S6 are the same as in Example 2.

First, in step S11, initial calibration is performed. In the initial calibration, initial parameters are calculated by perspective projection conversion. Perspective projection conversion is generally known (see, for example, JP-A-2006-287892). When the coordinates of a point on the shot image is represented by $(x_{bu}, y_{bu})$, and the coordinates of a point on the bird's-eye view image obtained by converting the shot image by perspective projection conversion are represented by $(x_{au}, y_{au})$, then coordinates $(x_{bu}, y_{bu})$ are converted to coordinates $(x_{au}, y_{au})$ according to formula (6) below.

$$\begin{bmatrix} x_{au} \\ y_{au} \end{bmatrix} = \begin{bmatrix} \dfrac{x_{bu}(fh\sin\theta_a + H_a y_{au}\cos\theta_a)}{fH_a} \\ \dfrac{fh(f\cos\theta_a - y_{bu}\sin\theta_a)}{H_a(f\sin\theta_a + y_{bu}\cos\theta_a)} \end{bmatrix} \qquad (6)$$

Here, $\theta_a$ represents, as shown in Fig. 10, the angle between the ground and the optical axis of the camera 1 ($90° < \theta_a < 180°$); h represents a quantity based on the height of the camera 1 (the translational displacement, in the direction of height, between the camera coordinate system and the world coordinate system); and f represents the focal length of the camera 1. As described earlier, in a bird's-eye view image, the image actually shot with the camera 1 is converted into an image as if viewed from the point of view (virtual viewpoint) of a virtual camera. $H_a$ represents the height of this virtual camera.

The values $\theta_a$, h, and $H_a$ can be regarded as camera external information (external parameters of the camera 1), and the value f can be regarded as camera internal information (an internal parameter of the camera 1). The values $\theta_a$, h, f, and $H_a$, which are necessary for perspective projection conversion, are collectively called "perspective projection setting information". The perspective projection setting information is previously set at the stage of designing, and is previously furnished in the image processing apparatus 2.

In the example shown in Fig. 9, according to formula (6), a homography matrix H expressed by formula (7) below is found as initial parameters. The finding of the homography matrix H according to formula (6) for perspective projection conversion is achieved by a generally known method. For example, as described previously in connection with Example 1, the homography matrix H is found based on the correspondence between the coordinates of four points on the shot image and their coordinates on the bird's-eye view image. The correspondence of the coordinates of four points is obtained from formula (6).

$$\begin{pmatrix} x_{au} \\ y_{au} \\ 1 \end{pmatrix} = H \begin{pmatrix} x_{bu} \\ y_{bu} \\ 1 \end{pmatrix} = \begin{pmatrix} h_1 & h_2 & h_3 \\ h_4 & h_5 & h_6 \\ h_7 & h_8 & h_9 \end{pmatrix} \begin{pmatrix} x_{bu} \\ y_{bu} \\ 1 \end{pmatrix}$$

$$= \begin{pmatrix} h_1 & h_2 & h_3 \\ h_4 & h_5 & h_6 \\ h_7 & h_8 & 1 \end{pmatrix} \begin{pmatrix} x_{bu} \\ y_{bu} \\ 1 \end{pmatrix} \qquad (7)$$

The calculation of the initial parameters in step S 11 is performed within the image processing apparatus 2, for example, after the perspective projection setting information (in particular $\theta_a$ and h) is set according to how the camera 1 is fitted to the vehicle 100. In a case, however, where conditions for installing the camera 1 are prescribed specifically enough to identify $\theta_a$ and h, and the camera 1 is supposed to be fitted according to those conditions, the initial parameters may be previously calculated based on the perspective projection setting information including those conditions at the stage of designing of the image processing apparatus 2. This is effective, for example, in a case where a vehicle is equipped with a camera at the time of manufacture of the vehicle.

After step S11, in step S12, with the calibration patterns A1 to A3 arranged within the shooting area as described previously, they are shot with the camera 1 to obtain a shot-for-calibration image. As in Example 1, the image obtained by subjecting the shot-for-calibration image to coordinate conversion using the homography matrix H found in step S 11 is called the "converted-for-calibration image". With the shot-for-calibration image and the converted-for-calibration image dealt with as an original image and a converted image, respectively, as in Example 1, when the coordinates of a point on the original image are represented by (x, y), and the coordinates of a point on the converted image are represented by (X, Y), then formulae (1), (2a), and (2b) noted previously hold.

After the initial parameters are found and the shot-for-calibration image is acquired in steps S11 and S12, the same operations as in Example 2 are performed. Specifically, after step S12, in step S3, the error evaluation value D described previously is calculated, and then, by performing the repeated calculations in steps S3 to S5, the homography matrix H is optimized such that the error evaluation value D is equal to or less than the predetermined threshold value. Thereafter, in step S6, the rotation matrix R for rotation correction is found. On completion of the operation in step S6, the conversion parameter calibration processing shown in Fig. 9 is ended. In Example 3, the latest homography matrix H obtained through the adjustment in steps S3 to S5 and the above-described rotation matrix R are dealt with as the calibrated conversion parameters.

In practice, for example, based on the latest homography matrix H and the above rotation matrix R, table data is created that indicates the correspondence between coordinates (x, y) on the original image and coordinates (X', Y') on the image after the rotation correction, and the table data is stored in an unillustrated memory (lookup table). By use of this table data, a shot image can be converted into a bird's-eye view image; in this bird's-eye view image, each calibration pattern appears substantially square, and in addition the image has been corrected for the inclination due to errors in the installation of the camera 1. In this case, the table data may be regarded as the above-mentioned calibrated conversion parameters.

After the conversion parameter calibration processing shown in Fig. 9, the image processing apparatus 2 shown in Fig. 2 converts one shot image after another obtained from the camera 1 to one bird's-eye view image after another by use of the calibrated conversion parameters based on the homography matrix H and the rotation matrix R. Here, each shot image is dealt with as an original image, and each bird's-eye view image is dealt with as an image after the rotation correction. Thus, the coordinates of a point on a shot image are represented by $(x, y)$, and the coordinates of a point on a bird's-eye view image is represented by $(X', Y')$. The image processing apparatus 2 feeds the video signal representing one bird's-eye view image after another to the display apparatus 3. The display apparatus 3 thus displays the bird's-eye view images as a moving image.

In a case where conversion parameters for converting a shot image to a bird's-eye view image are found by perspective projection conversion, the conversion parameters are affected by errors in the installation of the camera 1, and thus a calibration pattern, which should appear square on the bird's-eye view image, does not appear so. Thus, as described above, conversion parameters found by perspective projection conversion are dealt with as the initial values of conversion parameters (initial parameters), and then the conversion parameters are adjusted by use of a calibration pattern of a previously known shape. This makes it possible to absorb errors in the installation of the camera 1.

In Examples 1 and 2, after the camera 1 is installed on the vehicle 100, it is always necessary to calculate initial parameters within the image processing apparatus 2. By contrast, in Example 3, initial parameters can be previously found at the stage of designing. Even in a case where initial parameters are not previously found at the stage of designing, given perspective projection setting information, it is possible to calculate initial parameters easily. That is, Example 3 helps omit or simplify the processing for calculating initial parameters within the image processing apparatus 2.

**Modifications and Variations**

In connection with the embodiments described above, modified examples or supplementary explanations will be given below in Notes 1 to 6. Unless inconsistent, any part of the contents of these notes may be combined with any other.

Note 1: Although all examples deal with cases where the calibration patterns are each square in shape, they may each be given an arbitrary shape.

Note 2: In all examples described above, the shot-for-calibration image includes three calibration patterns A1 to A3 and, based on the individual characteristic points of the three calibration patterns, the conversion parameters are adjusted. Here, the total number of calibration patterns included in the shot-for-calibration image may be any number equal to or more than two. This is because, in a case where, as in Example 1 or 2, the initial values of conversion parameters (initial parameters) are found by planar projection conversion, by first calculating the initial values of conversion parameters by use of a calibration pattern (for example, the calibration pattern A1) for initial parameter calculation and then adjusting them by use of another calibration pattern (for example, the calibration pattern A2) for adjustment, it is possible to obtain the benefits mentioned above. In Examples 1 and 2 described above, the calibration pattern for initial parameter calculation is shared as the calibration pattern for adjustment.

In Example 3, initial parameters are calculated by perspective projection conversion, and therefore it is possible to omit the calibration pattern for initial parameter calculation. Thus, here, the total number of calibration patterns included in the shot-for-calibration image may even be one. This is because, with one calibration pattern alone, it is possible to absorb errors in the installation of the camera 1. In this case, that one calibration pattern functions as a calibration pattern for adjustment.

Although a reduced adjustment effect is expected to result, the above-mentioned calibration pattern for adjustment may be in the shape of a triangle or a line segment. That is, the total number of characteristic points included in a calibration pattern for adjustment may be three or two. Even when the calibration pattern for adjustment is in the shape of a line segment and includes only two characteristic points, so long as the shape is previously known (so long as the positional relationship of the two characteristic points relative to each other on the converted image is previously known), based on the errors between the shape of the calibration pattern for adjustment as it actually appears on the converted image and its shape as it should ideally appear there, it is possible to adjust and improve the initial values of conversion parameters (initial parameters).

Note 3: In the above description, a bird's-eye view image is an image in which an image shot with the camera 1 is projected onto the ground. That is, in the embodiments described above, a bird's-eye view image is produced by projecting an image shot with the camera 1 onto the ground. Instead, the shot image may be projected on any predetermined surface (for example, a predetermined plane) other than the ground that is arbitrarily selected.

Note 4: Although the invention has been described by way of embodiments that deal with a field-of-view assistance system employing the camera 1 as a vehicle-mounted camera, the camera connected to the image processing apparatus 2 may be fitted to anything other than a vehicle. That is, the invention may be applied as well to a monitoring system installed in a building or the like. In such a monitoring system, as in the embodiments described above, a shot image is projected onto a predetermined surface, and the image obtained as the result of the projection is displayed on a display apparatus.

Note 5: The functions of the image processing apparatus 2 can be realized in hardware, in software, or in a combination of hardware and software. All or part of the functions to be realized by the image processing apparatus 2 may be prepared in the form of a computer program so that those functions are, wholly or partly, realized as the program is executed on a computer.

Note 6: The parameter deriver that, in calibration processing, adjusts conversion parameters and thereby derives calibrated conversion parameters is incorporated in the image processing apparatus 2, and the camera calibration apparatus that is provided with the parameter deriver and that performs calibration processing for the camera is also incorporated in the image processing apparatus 2. The parameter deriver includes an initial parameter deriver that derives initial parameters and a parameter adjuster that adjusts conversion parameters. After the calibration processing, the image processing apparatus 2 functions as a projector that projects a shot image onto a predetermined surface and thereby produces a projected image (in the embodiments described above, a bird's-eye view image).

**Claims**

1.  A camera calibration apparatus comprising:

    a parameter deriver adapted to find parameters for projecting an image shot with a camera onto a predetermined surface, wherein
    the parameter deriver finds the parameters based on a shot-for-calibration image from the camera, and
    the shot-for-calibration image includes a plurality of calibration patterns of previously known shapes arranged at different positions within a shooting area of the camera.

2.  The camera calibration apparatus according to claim 1, wherein
    the plurality of calibration patterns include a first calibration pattern and a second calibration pattern,
    the parameter deriver
    first finds initial parameters based on
    coordinate information on the first calibration pattern on the shot-for-calibration image and
    first previously known information on the shape of the first calibration pattern, and
    then performs coordinate conversion on the second calibration pattern on the shot-for-calibration image by using the initial parameters and performs adjustment on the initial parameters based on
    a shape of the second calibration pattern after the coordinate conversion and
    second previously known information on this shape
    in order to find, through this adjustment, the parameters definitively.

3.  The camera calibration apparatus according to claim 2, wherein
    the first calibration pattern includes at least four characteristic points, and
    the first previously known information identifies a positional relationship of the four characteristic points relative to one another.

4.  A camera calibration apparatus comprising:

    a parameter deriver adapted to find parameters for projecting an image shot with a camera onto a predetermined surface, wherein
    the parameter deriver finds the parameters based on a shot-for-calibration image from the camera,
    the shot-for-calibration image includes a calibration pattern of a previously known shape arranged inside a shooting area of the camera, and
    the parameter deriver
    performs coordinate conversion on the calibration pattern on the shot-for-calibration image by using initial parameters based on previously set information and
    then performs adjustment on the initial parameters based on
    a shape of the calibration pattern after the coordinate conversion and previously known information on this shape
    in order to find, through this adjustment, the parameters definitively.

5.  A vehicle comprising:

a camera; and
an image processing apparatus, wherein
the image processing apparatus comprises the camera calibration apparatus according to any one of claims 1
to 4.

6. A camera calibration method for finding parameters for projecting an image shot with a camera onto a predetermined surface, comprising:

a parameter derivation step of finding the parameters based on a shot-for-calibration image from the camera, wherein
the shot-for-calibration image includes a plurality of calibration patterns of previously known shapes arranged at different positions within a shooting area of the camera.

7. A camera calibration method for finding parameters for projecting an image shot with a camera onto a predetermined surface, comprising:

a parameter derivation step of finding the parameters based on a shot-for-calibration image from the camera, wherein
the shot-for-calibration image includes a calibration pattern of a previously known shape arranged inside a shooting area of the camera, and
the parameter derivation step comprises a parameter adjustment step in which
coordinate conversion is performed on the calibration pattern on the shot-for-calibration image by using initial parameters based on previously set information and then
adjustment is performed on the initial parameters based on
a shape of the calibration pattern after the coordinate conversion and previously known information on this shape, so that, through this adjustment, the parameters are definitively found.

# FIG.1

# FIG.2

# FIG.3

```
                    ┌─────────────────┐
                    │      START      │
                    └─────────────────┘
                             │
                             ▼
   S1  ┌──────────────────────────────────────────────┐
       │  ACQUIRE SHOT-FOR-CALIBRATION IMAGE           │
       └──────────────────────────────────────────────┘
                             │
                             ▼
       ┌──────────────────────────────────────────────┐
       │  INITIAL CALIBRATION –                        │
       │    CALCULATE INITIAL PARAMETERS BY            │
   S2  │  PLANAR PROJECTION CONVERSION                 │
       │    (CALCULATE INITIAL VALUES OF              │
       │     CONVERSION PARAMETERS)                    │
       └──────────────────────────────────────────────┘
                             │
                             ▼
       ┌──────────────────────────────────────────────┐
       │  ERROR EVALUATION –                           │
   S3  │    CALCULATE ERROR EVALUATION                 │
       │            VALUE D                            │
       └──────────────────────────────────────────────┘
                             │
                             ▼                                    S5
           ◇                                       N    ┌────────────────────┐
   S4    D EQUAL TO OR LESS THAN                ───────▶│  ADJUST (CHANGE)    │
         THRESHOLD VALUE?                               │  CONVERSION         │
           ◇                                            │  PARAMETERS         │
                             │ Y                         └────────────────────┘
                             ▼
                    ┌─────────────────┐
                    │      END        │
                    └─────────────────┘
```

# FIG.4A

SHOT-FOR-CALIBRATION
IMAGE

# FIG.4B

CONVERTED IMAGE
IMMEDIATELY AFTER
INITIAL CALIBRATION

# FIG.4C

CONVERTED IMAGE
AFTER ADJUSTMENT
OF CONVERSION
PARAMETERS

# FIG.5

# FIG.6

```
                    ┌─────────────────┐
                    │      START      │
                    └─────────────────┘
                             │
                             ▼
   ┌───────────────────────────────────────────────────┐
S1 │      ACQUIRE SHOT-FOR-CALIBRATION IMAGE            │
   └───────────────────────────────────────────────────┘
                             │
                             ▼
   ┌───────────────────────────────────────────────────┐
   │ INITIAL CALIBRATION –                             │
   │     CALCULATE INITIAL PARAMETERS BY               │
S2 │   PLANAR PROJECTION CONVERSION                    │
   │      (CALCULATE INITIAL VALUES OF                 │
   │       CONVERSION PARAMETERS)                      │
   └───────────────────────────────────────────────────┘
                             │
                             ▼
   ┌───────────────────────────────────────────────────┐
   │ ERROR EVALUATION –                                │
S3 │     CALCULATE ERROR EVALUATION                    │
   │              VALUE D                              │
   └───────────────────────────────────────────────────┘
                             │
                             ▼                          S5
         D EQUAL TO OR LESS THAN          N    ┌────────────────────┐
S4  <    THRESHOLD VALUE?               >───▶  │  ADJUST (CHANGE)    │
                                               │   CONVERSION        │
                             │                 │   PARAMETERS        │
                             │ Y               └────────────────────┘
                             ▼
   ┌───────────────────────────────────────────────────┐
   │ CALCULATE IMAGE ROTATION ANGLE $\theta$           │
S6 │   (CALCULATE ROTATION MATRIX R)                   │
   └───────────────────────────────────────────────────┘
                             │
                             ▼
                    ┌─────────────────┐
                    │       END       │
                    └─────────────────┘
```

# FIG.7A

100

1

# FIG.7B

100

1

# FIG.8A

BEFORE ROTATION
CORRECTION

# FIG.8B

AFTER ROTATION
CORRECTION

# FIG.9

```
                        ┌─────────────────┐
                        │      START      │
                        └─────────────────┘
                                 │
                                 ▼
        ┌────────────────────────────────────────────────┐
        │ INITIAL CALIBRATION –                          │
        │ CALCULATE INITIAL PARAMETERS BY                │
   S11  │ PERSPECTIVE PROJECTION CONVERSION              │
        │ (CALCULATE INITIAL VALUES OF                   │
        │ CONVERSION PARAMETERS)                         │
        └────────────────────────────────────────────────┘
                                 │
                                 ▼
   S12  ┌────────────────────────────────────────────────┐
        │ ACQUIRE SHOT-FOR-CALIBRATION IMAGE             │
        └────────────────────────────────────────────────┘
                                 │
                                 ▼
        ┌────────────────────────────────────────────────┐
        │ ERROR EVALUATION –                             │
   S3   │ CALCULATE ERROR EVALUATION                     │
        │ VALUE D                                        │
        └────────────────────────────────────────────────┘
                                 │                                    S5
                                 ▼                          ┌──────────────────┐
   S4        ╱────────────────────────────╲       N        │ ADJUST (CHANGE)  │
           ╱   D EQUAL TO OR LESS THAN      ╲──────────────▶│   CONVERSION     │
           ╲     THRESHOLD VALUE?          ╱                │   PARAMETERS     │
             ╲────────────────────────────╱                └──────────────────┘
                                 │ Y
                                 ▼
   S6   ┌────────────────────────────────────────────────┐
        │ CALCULATE IMAGE ROTATION ANGLE $\theta$        │
        │ (CALCULATE ROTATION MATRIX R)                  │
        └────────────────────────────────────────────────┘
                                 │
                                 ▼
                        ┌─────────────────┐
                        │       END       │
                        └─────────────────┘
```

# FIG.10

# FIG.11

## FIG.12A PRIOR ART

301 SHOT IMAGE 300 304
302 303

## FIG.12B PRIOR ART

301 CONVERTED 310 304
IMAGE
302 303

## FIG.13A PRIOR ART

SHOT IMAGE 320
324
321 322 323

## FIG.13B PRIOR ART

CONVERTED 330
IMAGE
324
321 322 323

**EP 1 954 063 A2**

**Patent documents cited in the description**

- JP 2006287892 A
- JP 2006148745 A
- JP 2004342067 A